# EUROPÄISCHE PATENTSCHRIFT

(11) **EP 1 693 097 B1**
(45) Veröffentlichungstag und Bekanntmachung des Hinweises auf die Patenterteilung: **12.11.2008**
(21) Anmeldenummer: 06100712.6
(22) Anmeldetag: 23.01.2006
(51) Int. Cl.: B01D 29/96, B01D 35/14

(54) **Filtersystem**
Filter system
Système de filtration

(30) Priorität: 15.02.2005 DE 102005007021
(43) Veröffentlichungstag der Anmeldung: 23.08.2006
(73) Patentinhaber: MANN+HUMMEL GmbH, 71638 Ludwigsburg (DE)
(72) Erfinder: Bauder, Ralf, 68775, Ketsch (DE); Dworatzek, Klemens, 68535, Edingen (DE); Münkel, Karlheinz, 75038, Oberderdingen-Flehingen (DE); Nguyen, Duc Cuong, 30880, Laatzen (DE)

(56) Entgegenhaltungen:
- EP-A- 1 281 426
- WO-A-20/05005014
- DE-A1- 19 644 646
- US-A- 6 139 738
- US-B1- 6 481 580

## Beschreibung

Die Erfindung betrifft ein Filtersystem nach dem Oberbegriff des Patentanspruchs 1.

### Stand der Technik

Ein derartiger Flüssigkeitsfilter ist zum Beispiel aus der DE 196 44 647 A bekannt. Dieser Filter hat einen Anschlusskopf, dessen Einbauöffnung für die Filterpatrone nach unten weist und in den, nach Einbau des Filterelements ein becherförmiges Gehäuse eingeschraubt werden kann. Einlass und Auslass für den Filter bzw. das Filtersystem befinden sich im Anschlusskopf, das heißt im oberen Teil des Filtersystems.

Problematisch ist hierbei, dass Anschlusskopf und becherförmiges Gehäuse miteinander verbunden werden können, ohne dass ein Filterelement eingesetzt ist, oder wenn ein falsches für dieses System nicht vorgesehenes Filterelement eingesetzt ist. Als Gegenmaßnahme werden zu diesem Zweck die Filterelemente im Stand der Technik so unterschiedlich in der Form gestaltet, dass eine Verwechslung möglichst auszuschließen ist. Ein Fehlen des Filterelementes wird hierdurch jedoch immer noch nicht bemerkt. Weiterhin gibt es immer noch Anwendungen, bei denen sich die Filterelemente lediglich in Details, wie beispielsweise unterschiedliche Filtermedien, unterscheiden, wobei die Abmessungen und Geometrien weitgehend identisch bleiben. Auch hier ergibt sich wiederum das Problem, einer Fehlbestückung des Filtersystems, wodurch es zu großen Schäden innerhalb des Fluidkreislaufes kommen kann.

Die Aufgabe der Erfindung ist es nun, ein Filtersystem für ein Fluid zu schaffen, welches ein Vergessen oder ein Einsetzen eines falschen Filterelementes ausschließt, und welches einfach und kostengünstig in der Herstellung ist.

Diese Aufgabe wird durch die Merkmale des Patentanspruchs 1 gelöst.

Das erfindungsgemäße Filtersystem für ein Fluid weist ein becherförmiges Gehäuse, ein lösbar darin angeordnetes Filterelement und einen Aufnahmekopf auf. Bevorzugt ist das Filtersystem zur Filtrierung von Flüssigkeiten ausgelegt, es läßt sich jedoch auch eine Filtrierung von gasförmigen Fluiden vorstellen, wobei jedoch vorzugsweise die Filtration von Öl, Kraftstoff oder Kühlflüssigkeit einer Brennkraftmaschine vorgesehen ist. Der Aufnahmekopf kann ein separates Teil sein, welches beispielsweise an den Motorblock einer Brennkraftmaschine angeflanscht ist, es ist jedoch auch möglich, den Aufnahmekopf direkt beispielsweise aus dem Motorblock herauszubilden. Das Filterelement ist in dem becherförmigen Gehäuse lösbar angeordnet, wobei das becherförmige Gehäuse durch ein Mittel zur lösbaren Verbindung mit dem Aufnahmekopf verbunden ist. Das Mittel zur lösbaren Verbindung weist wenigstens zwei Wirkpartner auf, wobei der eine Wirkpartner im Aufnahmekopf angeordnet ist und der andere Wirkpartner durch eine Kombination eines Teils des Filterelementes integral mit dem becherförmigen Gehäuse gebildet wird. Das heißt also, dass die Verbindung des Gehäuses mit dem Aufnahmekopf nur durch die Kombination von becherförmigen Gehäuse mit dem dazu passenden Filterelement möglich ist. So wird das Filterelement zu einem unverzichtbaren Bestandteil des Verschlusses. Das becherförmige Gehäuse kann dabei als Kunststoff oder als Metallteil ausgeführt sein, und das Filterelement ist bevorzugt ein hohhylindrisches Filterelement mit einem darin angeordneten zick-zack-förmig gefalteten Filterbalg. Es ist jedoch auch möglich, hier ein im Wesentlichen zylindrisches Element mit stirnseitiger Durchströmung zu verwenden. Somit ist sichergestellt, dass jeweils nur das richtige Element eingesetzt werden kann. Dies wird dadurch erreicht, dass der Teil des Filterelementes, welcher integral mit einem Teil des becherförmigen Gehäuses den zweiten Wirkpartner des Verbindungsmittels darstellt, zu Aufnahmekonturen des becherförmigen Gehäuses korrespondierende Wirkkonturen aufweist. Ein weiterer Vorteil ist hierbei, dass ein versehentliches oder bewußtes Weglassen des Filterelementes im Wartungsfall ein Schließen der Verbindung verhindert.

Gemäß der Erfindung ist das Mittel zur lösbaren Verbindung eine Bajonettverbindung. Hierbei wird ein Teil der Rastverbindungen im Anschlusskopf gebildet und der weitere Teil der Rastverbindung durch die Kombination aus Filterelement und becherförmigen Gehäuse dargestellt. Das Filterelement wird hierzu in das becherförmige Gehäuse eingesetzt und beides wird mittels des Bajonettprinzips mit dem Anschlusskopf verbunden. Bei fehlendem oder falschem Filterelement läßt sich die Bajonettverbindung nicht schließen.

Es ist erfindungsrelevant, dass ein Teil des becherförmigen Gehäuses und ein Teil des Filterelements wenigstens teilweise ineinander greifen und so eine durchgehende Rastkontur bilden. Hierbei bildet bevorzugt das becherförmige Gehäuse einen Teil einer Rastebene mit einer darin angeordneten Aussparung und ein Teil des Filterelementes greift in diese Aussparung ein und komplettiert so die Rastebene, welche zur Herstellung der Bajonettverbindung mit dem Aufnahmekopf notwendig ist. Die Rastebenen sind dabei bevorzugt am stirnseitigen offenen Ende des becherförmigen Gehäuses über den äußeren Umfang verteilt, wodurch dann die Wirkkonturen des Filterelementes, welche in die Aussparung der Rastebenen eingreifen, ebenfalls im gleichen Abstand am Umfang verteilt sind. Dadurch läßt sich in einfacher Art und Weise erzielen, dass nur das für diese Anwendung vorgesehene Filterelement in das Filtersystem eingesetzt wird.

Es ist zweckmäßig, wenn ein Teil des becherförmigen Gehäuses und ein Teil des Filterelements wenigstens teilweise ineinander greifen um eine durchgehende Rastnasenkontur zu bilden. Bevorzugt ist dabei am axialen offenen stirnseitigen Ende des becherförmigen Gehäuses wenigstens zwei axial sich vom Gehäuse weg erstreckende Rastnasen angeordnet, welche wiederum Aussparungen aufweisen, welche am Rand oder am Inneren der Rastnasenkontur angeordnet sind, in welche dann ein Teil des dazu passenden Filterelementes eingreift. Dieser Teil des entsprechenden Filterelementes komplettiert wiederum die vollständige Rastnasenkontur, so dass bei eingesetztem richtigem Filterelement eine lösbare Verbindung über Verrastung mit dem Aufnahmekopf möglich ist.

Die Verhinderung der Verbindung zwischen becherförmigem Gehäuse und Anschlusskopf wird gemäß der Erfindung durch ein Mittel zur Blockierung der Verbindung welches im Anschlusskopf angeordnet ist erzielt. Dies Mittel zur Blockierung kann beispielsweise ein federgelagerter Stift oder beispielsweise eine bewegliche Nase sein, es sollte auf jeden Fall eine Kontur sein, welche formschlüssig das Verbinden der Teile miteinander behindert sollte dass Filterelement fehlen oder nicht für das Filtersystem geeignet sein. Dieses Mittel zur Blockierung wird dann beispielsweise über Federkraft beim Schließen der Verbindung und bei fehlen des Filterelementes oder bei falschem Filterelement in die dann nicht geschlossene Aussparung im Verbindungsmittel des becherförmigen Gehäuseteils eingerastet und verhindert somit ein Weiterdrehen oder weiteres axiales Einschieben des becherförmigen Gehäuseteils in den Anschlusskopf.

Der Anschlusskopf für ein oben genanntes Filtersystem weist Konturen zur Ausbildung des zweiten Teils des Mittels zur lösbaren Verbindung zwischen becherförmigem Gehäuse in Verbindung mit dem Filterelement und Anschlußkopf auf. Weiterhin sind im Anschlusskopf die Fluidzu - und ableitungen integriert. Bevorzugt weist dabei der Anschlusskopf eine becherförmige Vertiefung auf, wobei die Konturen zur Ausbildung des zweiten Teils des Mittels zur lösbaren Verbindung über den Umfang der axialen Wand der Vertiefung verteilt sind. Bevorzugt ist die konzentrisch im Mittelpunkt der becherförmigen Vertiefung des Anschlusskopfes der Fluidablauf angeordnet und konzentrisch um den Flüssigkeltsablauf herum immer noch innerhalb der becherförmigen Vertiefung der Fluidzulauf.

Gemäß einer vorteilhaften Ausgestaltung des Anschlusskopfes weist dieser das oben beschriebene Mittel zur Blockierung der Verbindung mit dem becherförmigen Gehäuse auf. Das Mittel wie schon gesagt kann ein beweglicher Stift oder eine bewegliche Nase sein welche beweglich im Anschlusskopf gelagert ist. Beim Einsetzen des becherförmigen Gehäuses in Verbindung mit einem dazu passenden Filterelement wird durch die Verbindungsmittel des becherförmigen Gehäuses und des Filterelementes das Mittel zur Blockierung in eine Verbindungsposition bewegt. In dieser Verbindungsposition eine problemlose lösbare Verbindung zwischen Anschlusskopf und becherförmigen Gehäuse inklusive dem dazupassenden Filterelement eingegangen werden kann.

Das erfindungsgemäße Gehäuse für ein oben genanntes Filtersystem ist im Wesentlichen zylindrisch ausgestaltet, wobei eine Stirnseite geschlossen und eine Stirnseite offen ausgeführt ist, ähnlich einem henkellosen Becher. Im Bereich der offenen Stirnseite sind Teile eines Mittels zur lösbaren Verbindung mit einem Aufnahmekopf angeordnet, wobei die Teile der lösbaren Verbindung Aussparungen beinhalten, derart, dass die Mittel zur lösbaren Verbindung mittels eines eingesetzten Filterelementes vervollständigbar sind.

Gemäß einer weiteren Ausgestaltung des becherförmigen Gehäuses sind die Mittel zur lösbaren Verbindung über den äußeren Umfang verteilt, am stirnseitigen offenen Ende des becherförmigen Gehäuses angeordnet. Zusätzlich zu den Aussparungen innerhalb der Mittel zur lösbaren Verbindung sind weiterhin Aussparungen im Gehäuse vorhanden, welche sich vom stirnseitigen offenen Rand bis wenigstens zu den Mitteln zur lösbaren Verbindung erstrecken. Das heißt, dass in der Mantelfläche des zylindrischen Teils des becherförmigen Gehäuses ausgehend vom offenen Ende schlitz- oder nutförmige Aussparungen angeordnet sind, in welche das Filterelement mittels der an einem Teil des Filterelements vorhandenen Teile des Mittels zur lösbaren Verbindung eingesetzt werden kann, und welche dann einen Teil der Mantelfläche und einen Teil der Mittel zur lösbaren Verbindung des becherförmigen Gehäuses komplettiert.

Das erfindungsgemäße Filterelement für ein oben genanntes Filtersystem ist hohlzylindrisch aufgebaut und weist im Bereich einer der Stirnseiten wenigstens eine radial nach außen über den umfangsseitigen Durchmesser hinausgehende Wirkkontur auf. Diese Wirkkontur wirkt mit den Aussparungen im becherförmigen Gehäuse zusammen, so dass die Wirkkontur des Filterelementes in die Aussparungen des becherförmigen Gehäuses eingesetzt werden kann und weiterhin die Mittel zur lösbaren Verbindung des becherförmigen Gehäuses komplettiert. Das Filterelement weist dabei ein Filtermedium auf, welches radial oder axial durchströmt wird und zick-zack-förmig gefaltet, gewickelt ist oder wechselseitig geschlossene Kanäle aufweist. Das Medium kann dabei ein synthetisches Filtermedium oder auch ein Filterpapier sein und im Filterelement können ein oder mehrere Filterbalge angeordnet sein. Weiterhin kann das Filterelement eine geschlossene fluiddichte Ummantelung oder offen ausgeführt sein. Die dem Anschlusskopf gegenüberliegende Seite des Filterelements weist eine geschlossene Endscheibe auf und die dem Anschlusskopf zugewiesene Stirnseite weist bevorzugt eine ringförmige offene Endscheibe auf. Die Endscheiben können dabei aus Kunststoff oder auch beispielsweise aus einem Nitrilkautschuk gebildet sein. Weiterhin besteht die Möglichkeit das Filtermedium mittels eines Stützrohres welches im Inneren des hohlzylindrischen Filtermediums oder Außen um das hohlzylindrische Filtermedium herum angeordnet ist gegen ein Kollabieren durch Pulsation zu schützen. Im Bereich der Verbindung zum Anschlusskopf ist es weiterhin vorteilhaft eine Rücklaufsperre in Form beispielsweise einer Membran und/oder eines Ventils zum Schutz gegen Leerlaufen bei stehender Brennkraftmaschine anzuordnen. Die Wirkkontur des Filterelementes welche mit dem becherförmigen Gehäuse korrespondiert ist bevorzugt an der anschlussseitigen Stirnseite des Filterelementes angeordnet und kann dabei beispielsweise aus einem Stützrohr herausgebildet sein, aus der Endscheibe herausgebildet sein, oder aber auch aus der eventuell vorhandenen Ummantelung heraus ausgebildet sein.

Es ist vorteilhaft, wenn die Wirkkontur direkt korrespondierend zu einer Aussparung des becherförmigen Gehäuses ausgelegt ist, wobei die Wirkkontur weiterhin einen Teil eines Mittels zur lösbaren Verbindung des becherförmigen Gehäuses ergänzt. Dadurch wird sichergestellt, dass in das becherförmige Gehäuse nur ein spezielles dafür vorgesehenes Filterelement eingesetzt werden kann und weiterhin dass das becherförmige Gehäuse nur mit diesen dafür vorgesehenen Filterelement auch mit dem Anschlusskopf verbunden werden kann. Die Wirkkontur füllt dabei eine Aussparung innerhalb des Verbindungsmittels des becherförmigen Gehäuses aus und ergänzt dieses zu einem vollständigen Verbindungsmittel.

Somit wird deutlich, dass jedes Teil des Filtersystems seinen eigenen technischen Beitrag zum Gesamtsystem des Filters leistet. Nur die Kombination aus vorgesehenem Filterelement mit passendem becherförmigem Gehäuse läßt sich im Anschlusskopf lösbar und dichtend arretieren.

Zur Wartung und im Servicefall ist es immens wichtig, dass erstens überhaupt ein Filterelement eingesetzt wird und zweitens das für das Filtersystem und für die Anwendung richtige Filterelement eingesetzt wird. Dazu wird das Filterelement mit seinen äußeren Wirkkonturen in entsprechende Aussparungen des becherförmigen Gehäuses eingesetzt, wodurch sich die Wirkkonturen des Filterelementes mit entsprechenden Wirkkonturen des becherförmigen Gehäuses zu einem Teil des Mittels zur lösbaren Verbindung zwischen Aufnahmekopf, becherförmigen Gehäuse und Filterelement vereinigen. Dadurch kann daraufhin die Kombination aus becherförmigen Gehäuse und Filterelement in den Aufnahmekopf eingesetzt werden und mit diesem lösbar verbunden werden. Nur durch die korrekte Verbindung von Filterelement und becherförmigen Gehäuse ist es möglich die Verbindung zu schliessen.

Diese und weitere Merkmale von bevorzugten Weiterbildungen der Erfindung gehen außer aus den Ansprüchen auch aus der Beschreibung und der Zeichnung hervor.

### Zeichnung

Weitere Einzelheiten der Erfindung werden in der Zeichnung anhand von schematischen Ausführungsbeispielen beschrieben.

Hierbei zeigt
- Figur 1: eine Schnittdarstellung des Flüssigkeitssystems,
- Figur 2: einen Schnitt von Filterelement und becherförmigem Gehäuse,
- Figur 3: eine isometrische Ansicht von Filterelement und becherförmigem Gehäuse,
- Figur 4: eine einzelisometrische Ansicht des becherförmigen Gehäuses,
- Figur 5: einen Schnitt durch die Außenhülle des Filterelementes,
- Figur 6: eine isometrische Ansicht der Rücklaufsperrmembran,
- Figur 7: zeigt eine Draufsicht auf einen Schnitt im Bereich des Blockiermittels,
- Figur 8: zeigt einen Schnitt durch eine alternative Rücklaufsperrmembran und
- Figur 9: einen Schnitt durch einen Teil eines alternativen Filterelementes.

### Ausführungsformen der Erfindung

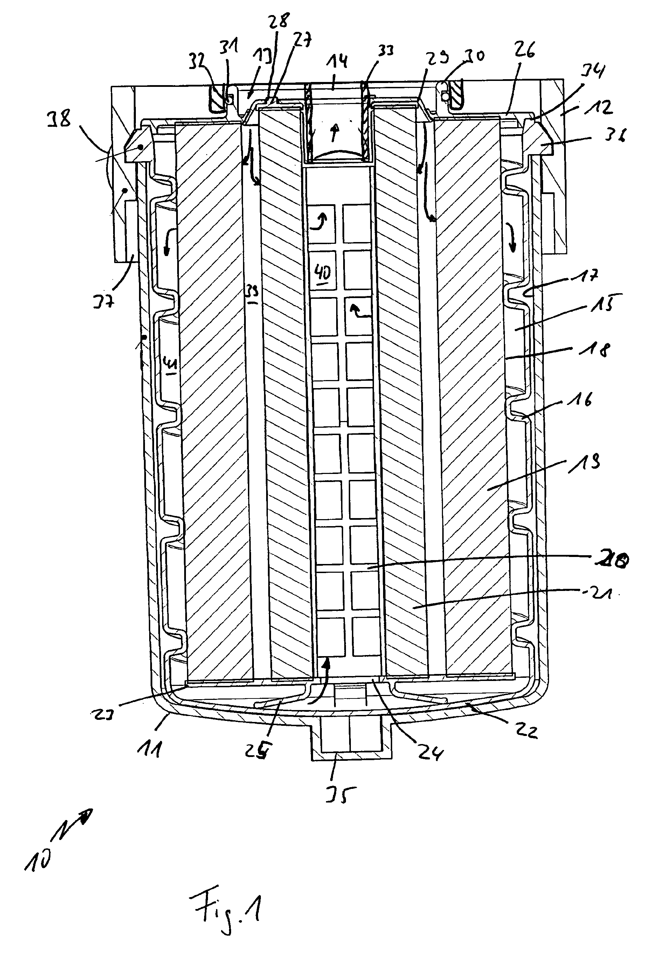

Die Figur 1 zeigt die Schnittdarstellung eines Flüssigkeitsfiltersystems 10, wobei ein becherförmiges Gehäuse 11 mittels einer Bajonettverbindung mit einem Anschlusskopf 12 verbunden ist. Der Anschlusskopf kann hierbei ein separater Anschlussflansch sein, oder auch direkt aus einer Komponente einer Brennkraftmaschine gebildet sein. Das Filtersystem kann verwendet werden für Flüssigkeiten jedweder Art einer Brennkraftmaschine, wie beispielsweise Öle, Kraftstoffe, Hydraulikflüssigkeiten oder auch Kühlmittel. Im Anschlusskopf 12 des Filtersystems 10 sind ein Einlass 13 und eine Auslass 14 angeordnet.

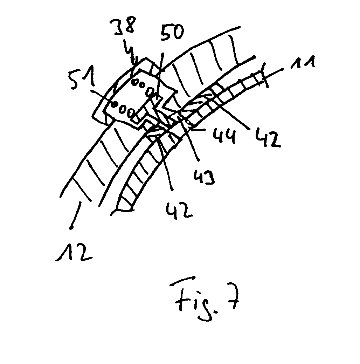

Der Auslass 14 ist dabei konzentrisch im Zentrum der Verbindung zwischen becherförmigem Gehäuse 11 und Anschlusskopf 12 angeordnet und der Einlass 13 ist dabei konzentrisch um den Aulsass 14 verteilt, ebenfalls im Inneren der Verbindung zwischen becherförmigem Gehäuse 11 und Anschlusskopf 12 angeordnet. Im becherförmigen Gehäuse 11 ist ein Filterelement 15 angeordnet. Das Filterelement 15 weist hierbei einen Kanister 16 auf, welcher das oder die Filtermedien aufnimmt. Der Kanister 16 stützt sich umfangsseitig radial nach aussen an einer Innenwandung 17 des becherförmigen Gehäuses 11 ab, und stützt gleichzeitig durch im Kanister 16 angeordnete Nuten eine Aussenwandung 18 eines ersten Filterbalges 19 ab. Der Kanister 16 ist flüssigkeitsdicht ausgeführt, und beherbergt zusätzlich die Funktion eines äußeren Stützrohres für einen ersten Filterbalg und einer Abstützung gegen Druckpulsationen am becherförmigen Gehäuse 11. Dadurch kann der Kanister 16 in seiner Materialstärke relativ gering ausgelegt werden, da die eigentliche Abstützung je Druckpulsation am becherförmigen Gehäuse 11 erfolgt. Im Inneren des Filterelementes ist konzentrisch ein Stützrohr 20 angeordnet, um welches sich ein zweiter Filterbalg 21 herum erstreckt. Der erste und der zweite Filterbalg können dabei durch ein zick-zack-förmig gefaltetes Filtermedium, durch ein gewickeltes Filtermedium, einer Kombination daraus oder sonstigem Stand der Technik bekannten Filterbalgen gebildet sein. Im Bereich eines Gehäusebodens 22 des Kanisters 16 werden die beiden Filterbalge durch eine Endscheibe 23, welche kreisringförmig mit einer konzentrisch angeordneten Öffnung 24 ausgeführt ist, gehalten. Einstückig aus der Endscheibe 23 heraus geformt ist ein Federelement 25, welches die Filterbalge am Gehäuseboden 22 abstützt und durch Aufbringung einer axial nach oben wirkenden Federkraft axial festlegt und fixiert. Die radiale Festlegung und Fixierung erfolgt durch die Innenkontur des Kanisters 16. Am gegenüberliegenden Ende der Filterbalge weist der erste Filterbalg 19 einen Endscheibenabschluss 26 auf. Der zweite Filterbalg 21, welcher im Inneren des ersten Filterbalgs 19 angeordnet ist, weist eine geringfügig höhere axiale Erstreckung als der erste Filterbalg 19 auf, und der stirnseitige Abschluss des zweiten Filterbalgs 21 erfolgt über eine Endscheibe 27, welche kreisringförmig geformt ist und konzentrisch einen Durchlass für den Auslass 14 darstellt. Axial in Richtung des Anschlusskopfes 12 hinausragend, weist die Endscheibe 27 eine Einknüpfkontur 28 für eine Rücklaufsperrmembran 29 auf. Die Einknüpfkontur 28 ist dabei über die Endscheibe 27 verteilt und weist mehrere axial in Richtung des Anschlusskopfes 12 herausstehende Stifte oder pilzförmige Konturen auf. Die Rücklaufsperrmembran 29 wird dabei dicht auf die Endscheibe 27 mittels der Einknüpfkontur 28 aufgeknüpft und dichtet bei stehender Brennkraftmaschine einerseits den Flüssigkeitseinlass 13 ab sowie im Wartungsfall den Flüssigkeitsauslass 14. Bevorzugt ist die Rücklaufsperrmembran 29 dabei aus einem weichen thermoplastischen Kunststoff aufgebaut wie beispielsweise ein thermoplastisches Elastomer (TPE). Die Endscheibe 26 weist konzentrisch einen axial herausstehenden Ringkragen 30 auf, wobei im äußeren Umfang eine Nut zur Aufnahme eines Dichtrings 31 angeordnet ist. Der Ringkragen 30 wird beim Verbinden vom becherförmigen Gehäuse 11 und Anschlusskopf 12 in eine Kragenaufnahme 32 des Anschlusskopfes eingeführt, wobei der Dichtring 31 dort zu einer Abdichtung zwischen Ringkragen 30 und Kragenaufnahme 32 dient. Konzentrisch im Inneren der Kragenaufnahme 32 ist ein Auslassrohr 33 angeordnet, welches in die Öffnung der Endscheibe 27 eintaucht und dabei die auslassseitige Rücklaufsperre der Rücklaufsperrmembran 29 öffnet. Zur Abdichtung zwischen Roh- und Reinseite erfolgt die Dichtung hierbei radial zwischen Rücklaufsperrmembran 29 und Auslassrohr 33, welches im Anschlusskopf 12 angeordnet ist. Zur flüssigkeitsdichten Abdichtung des Filterelements 15 sind der Kanister 16 und die Endscheibe 26 über eine Verbindungskontur 34 beispielsweise durch ein Schweiß- oder Klebverfahren unlösbar dichtend miteinander verbunden. Das becherförmige Gehäuse 11 weist zum Lösen im Wartungsfall und zum Verbinden eine Werkzeugaufnahme 35 auf, welche beispielsweise einen Innen- oder Aussensechskant aufweisen kann. Dort wird im Wartungsfall ein Werkzeug angesetzt um das becherförmige Gehäuse 11 vom Anschlusskopf 12 zu trennen oder beide Teile wiederum zu verbinden. Aus dem einen axialen Ende des Kanisters 16 der den über den Umfang verteilt mehrere Teile 36 von Rastelementen in Form einer radial nach aussen stehenden Nase ausgebildet. Diese greifen in Aussparungen des becherförmigen Gehäuses sowie Aussparungen innerhalb einer Rastkontur des becherförmigen Gehäuses 11 welche in den folgenden Figuren gezeigt werden ein. Gleichzeitig dient der Teil 36 der Rastelemente des Kanisters 16 auch als Verbindungskontur 34 zur Endscheibe 26. Der Anschlusskopf 12 weist Führungen 37 auf, in welche Rastkonturen gebildet aus dem Teil 36 der Rastelemente des Kanisters 16 und aus dem becherförmigen Gehäuses 11 eingeschoben und geführt werden können. Im äußeren Berech des Anschlusskopfes 12 ist wenigstens ein Blockiermittel 38 angeordnet, welches eine Verbindung zwischen becherförmigem Gehäuse und Anschlusskopf 12 verhindert, wenn kein Filterelement 15 oder ein falsches Filterelement eingesetzt ist. Dabei greift dann das Blockiermittel 38 in eine Aussparung 44 des becherförmigen Gehäuses 11 ein und verhindert so ein Schließen des Bajonettverschlusses. Die Funktion des Blockiermittels 38 ist in der Figur 7 dargestellt.

Die zu reinigende Flüssigkeit fließt durch den Einlass 13 des Anschlusskopfes 12 in einen Zwischenraum 39 zwischen den beiden Filterbalgen 19, 21, durchströmt den inneren zweiten Filterbalg 21 in einem reinseitigen Abflussraum 40 innerhalb des Stützrohrs 20 um dann durch die durch das Auslassrohr 33 geöffnete Rücklaufsperrmembran 29 durch den reinseitigen Auslass 14 zurück in das System zu strömen. Ein weiterer Teil der noch nicht gereinigten Flüssigkeit durchströmt ausgehend vom Zwischenraum 39 den äusseren ersten Filterbalg 19 radial nach aussen in ein kanisterseitiges Volumen, in dem es nach unten bis zum Gehäuseboden 22 strömt und von dort aus auch durch den reinseitigen Auslass 14 in das System zurückgeführt werden kann.

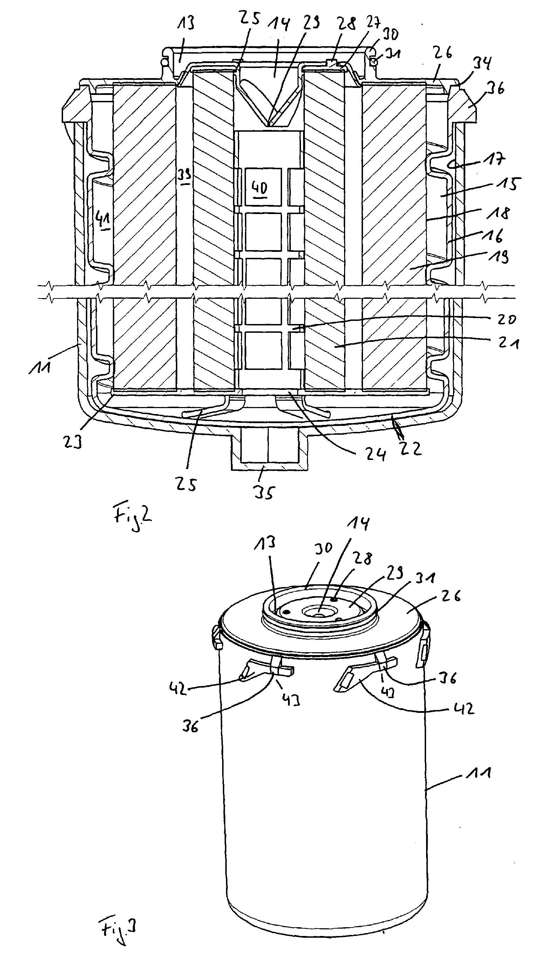

In Figur 2 ist die Kombination aus Filterelement 15 und becherförmigem Gehäuse 11 im Schnitt dargestellt. Der vorherigen Figur entsprechende Bauteile sind mit den gleichen Bezugszeichen versehen. Hier ist zu erkennen, dass bei vom Anschlusskopf 12 gelösten becherförmigen Gehäuse 11 inklusive Filterelement 15 die Rücklaufsperrmembran 29 im Bereich des reinseitigen Auslasses 14 durch das nicht mehr vorhandene Auslassrohr 33 in die Ursprungsform zurückgekehrt ist und ein Ausfließen der im Filterelement 15 gespeicherten Flüssigkeit verhindert. Durch die Ausführung der Rücklaufsperrmembran 29 als thermoplastisches Elastomer kann durch die Kontur eine Rückstellkraft innerhalb der Sperrmembran hervorgerufen werden, welche sich in einer auslassseitigen Dichtung, welche allein durch die Rückstellkraft dicht geschlossen ist, äußert.

Die Figur 3 zeigt eine isometrische Ansicht von becherförmigem Gehäuse 11 und darin angeordneten Filterelement 15. Den vorherigen Figuren entsprechende Bauteile sind mit en gleichen Bezugszeichen versehen. Hier sind deutlich die mehreren Einknüpfkonturen 28 der Endscheibe 27 für die Rücklaufsperrmembran 29 zu erkennen. Desweiteren sind am offenen axialen Ende des becherförmigen Gehäuses 11 umfangsseitig mehrere Rastkonturen 42 für die Herstellung des Bajonettverschlusses innerhalb des Filtersystems 10 gleichmäßig verteilt angeordnet. In einer Aussparung 43 der Rastkontur 42 ist der filterelementsseitige Teil 36 des Rastelementes bei korrekt installiertem Filterelement 15 angeordnet, wodurch sich eine Komplettierung der Rastkontur 42 ergibt. Bei nicht eingesetztem Filterelement 15 oder einem nicht hierzu passenden Filterelement bleibt die Aussparung 43 innerhalb der Rastkontur 42 frei, wodurch ein bajonettförmiges Verbinden zwischen becherförmigem Gehäuse 11 und Anschlusskopf 12 durch das Blockiermittel 38 verhindert wird. Das Blockiermittel 38 greift dann in die Aussparung 43 ein und verhindert ein Verdrehen des becherförmigen Gehäuses 11 relativ zum Anschlusskopf 12.

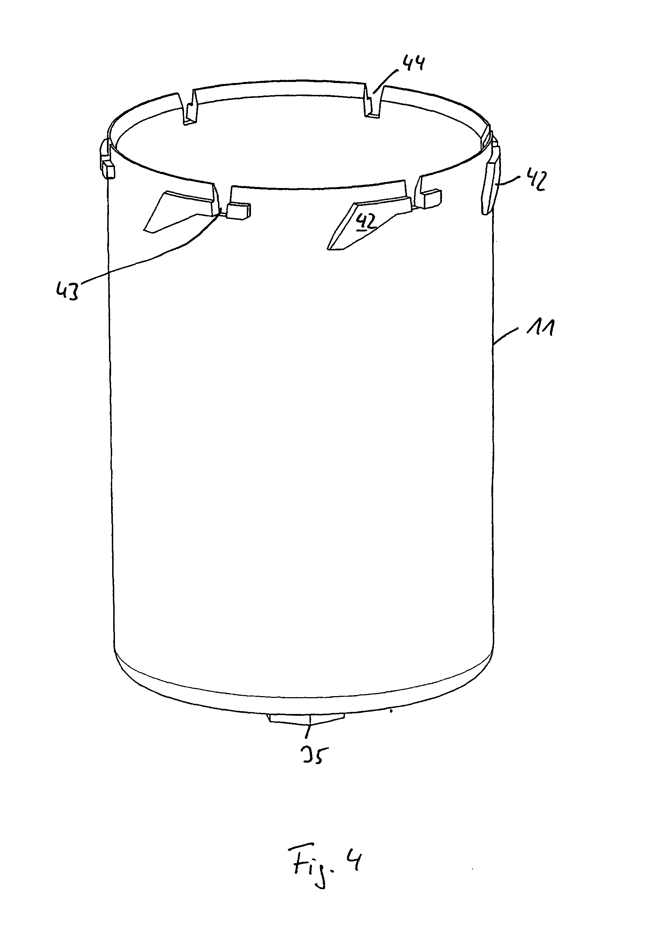

Die Figur 4 zeigt das becherförmige Gehäuse 11 in isometrischer Ansicht. Das becherförmige Gehäuse 11 weist zum Einführen des Filterelements 15 über den Umfang verteilte axial vom offenen Ende des becherförmigen Gehäuse 11 ausgehende Aussparungen 44 auf, welche in den Aussparungen 43 für die Rastkontur enden. So wird das Filterelement 15 mit den Teilen 36 der Rastelemente in die Aussparung 44 eingesetzt und bis zur Komplettierung der Rastkontur 42 bis zum Ende der Aussparung 43 der Rastkontur eingesetzt. Erst dadurch ergibt sich eine Vervollständigung der Rastkonturen 42 zur Verbindung mit dem Anschlusskopf 12.

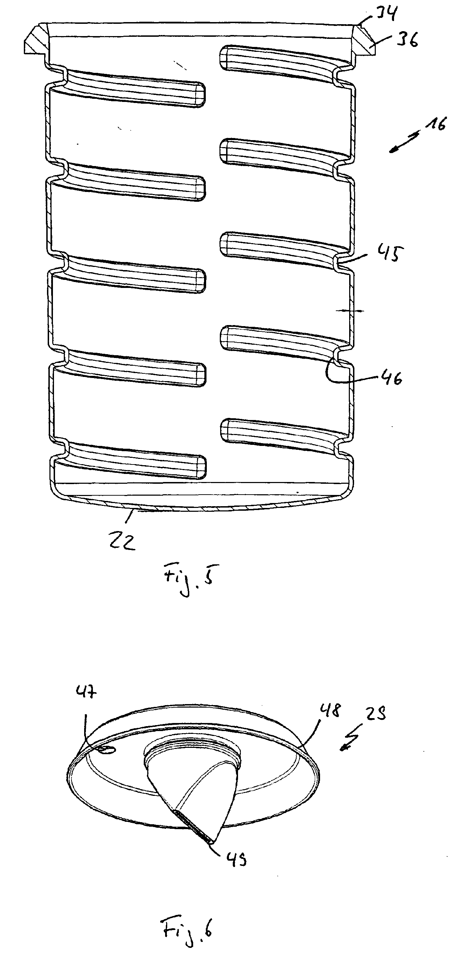

Die Figur 5 zeigt einen Schnitt durch den Kanister 16 welcher die Aussenhülle des Filterelements 15 darstellt. Über die Mantelfläche des Kanisters 16 verteilt, sind mehrere Nuten 45, welche im Inneren des Kanisters 16 eine Anlagefläche 46 für den ersten Filterbalg 19 darstellen. Da die Nuten 45 nicht durchgehend im inneren Umfang des Kanisters 16 angeordnet sind, ergibt sich so eine einfache Möglichkeit die Flüssigkeit, welche gereinigt den ersten Filterbalg 19 durchströmt, über den Gehäuse bzw. Kanisterboden 22 dem reinseitigen Abflussraum 40 zuzuführen. In den Kanister 16 wird dann der Rest des oben beschriebenen Filterelementes eingeführt und an der Verbindungskontur 34 mit dem Kanister 16 verbunden. Dadurch entsteht ein flüssigkeitsdichtes System welches im Wartungsfall dafür sorgt, dass eine Verschmutzung der Umgebung und der Umwelt sowie schmutzige Finger des Wartenden vermieden werden können. Der axiale Abschluss des Kanisters 16 im Bereich des offenen Endes wird wiederum durch den Teil 36 der Rasteelemente gebildet, welcher in die Aussparung 43 der Rastkontur 42 des becherförmigen Gehäuses 11 eingreift.

Die Figur 6 zeigt die Rücklaufsperrmembran einer isometrischen Ansicht. Den vorherigen Figuren entsprechende Bauteile sind mit den gleichen Bezugszeichen versehen. Die Rücklaufsperrmembran ist im wesentlichen plattenförmig aufgebaut, bevorzugt aus einem thermoplastischen Elastomer hergestellt und weist im plattenförmigen Teil mehrere Öffnungen 47 zur Herstellung der Knüpfverbindung mit der Endscheibe 27 über die Anknüpfkontur 28 auf. Im äußeren Bereich weist die Rücklaufsperrmembran 29 eine zum plattenförmigen Bereich gewinkelte Dichtfläche 48 für den Einlassbereich des Filtersystems 10 auf, welcher durch die Flexibilität des Materials bei Einströmen der zu reinigenden Flüssigkeit sich von einer Dichtfläche in der Abschlussendscheibe 26 abhebt und dadurch ein Einströmen der Flüssigkeit gewährleistet. Bei stehender Brennkraftmaschine, das heißt wenn kein Flüssigkeitsdruck an der Rücklaufsperrmembran anliegt, verschließt die Dichtfläche 48 den Einlass 13 durch ihre Elastizität. Konzentrisch im Inneren der Rücklaufsperrmembran 29 ist eine Art Dichtventil 49 zur Abdichtung des Auslasses bei Herausnahme des Filterelementes aus dem Flüssigkeitskreislauf angeordnet. Die Auslassdichtung 49 weist eine Art Entenschnabel auf, welcher im eingesetzten Zustand durch das Auslassrohr 33 aus dem Anschlusskopf 12 heraus geöffnet wird, welche sich weiterhin bei Herausnahme des Auslassrohrs 33 durch die eigene Elastizität wieder schließt. Hier sind also Rücklaufsperrmembran und Rücklaufsperrventil einstückig in einem Bauteil realisiert.

Die Figur 7 zeigt eine Möglichkeit der Anwendung des Blockiermittels 38. Den vorherigen Figuren entsprechende Bauteile sind mit en gleichen Bezugszeichen versehen. In der Figur 7 ist eine Draufsicht eines Schnitts im Bereich des Blockiermittels 38 dargestellt. Das Blockiermittel 38 ist im Anschlusskopf 12 angeordnet, wobei im Anschlusskopf 12 ein Verriegelungsstift 50 sowie ein Federmittel 51 angeordnet ist derart, dass der Verriegelungsstift 50 axial gegen die Kraft des Federmittels 51 beweglich ist, und bei einem Zusammenführen von becherförmigem Gehäuse 11 und Anschlusskopf 12 bei nicht vorhandenem oder vorgesehenem Filterelement 15 durch die Kraft des Federmittels 51 in die Aussparung der Rastkontur 43 einrastet und so ein Verdrehen zur Herstellung der Bajonettverbindung verhindert. Bei korrekt eingesetztem Filterelement 15 sind die Aussparungen 43 und 44 durch den Teil 36 des Rastelementes des Filterelementes 15 ausgefüllt und komplettieren somit die Rastkontur 42 wodurch der Verriegelungsstift 50 gegen die Kraft des Federmittels 51 in den Anschlusskopf 12 hineingedrückt wird und somit ein Verdrehen von becherförmigem Gehäuse 11 gegenüber Anschlusskopf 12 möglich ist, wodurch die Bajonettverbindung hergestellt werden kann.

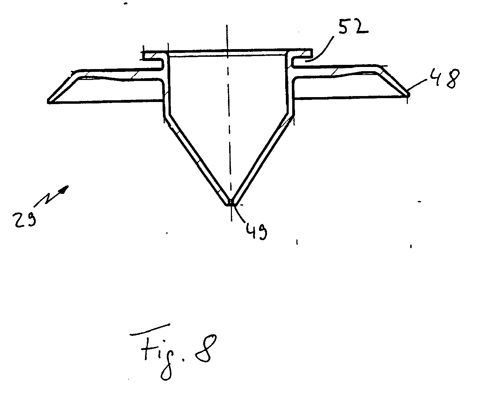

Figur 8 zeigt einen Schnitt durch eine alternative Rücklaufsperrmembran 29. Den vorherigen Figuren entsprechende Bauteile sind mit den gleichen Bezugszeichen versehen. Hier wird die Befestigung mit dem Filterelement in alternativer Weise über eine umlaufende, konzentrisch zur Einlassdichtfläche 48 angeordnete Ringnut 52 realisiert. Diese dient dann zur Aufnahme einer hier nicht dargestellten Endscheibe, wobei diese Anbindung in der folgenden Figur erläutert wird.

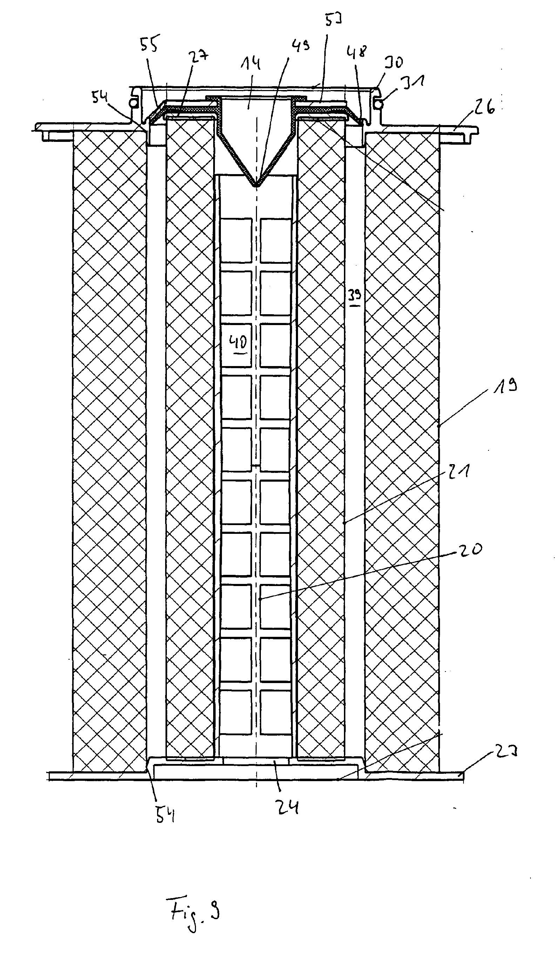

Figur 9 zeigt einen Schnitt durch einen Teil eines alternativen Filterelementes unter Einsatz der Rücklaufsperrmembran 29. Den vorherigen Figuren entsprechende Bauteile sind mit den gleichen Bezugszeichen versehen. Hierbei ist der innere Filterbalg 21 über ein Spiegelschweißverfahren mit der unteren Endscheibe 23 und der oberen Endscheibe 27 dichtend verbunden. Der Endscheibenabschluss 26 weist konzentrisch einen Befestigungsring 53 auf, über den die Rücklaufsperrmembran 29 mittels des Befestigungsringes 53 gehalten wird. Der Befestigungsring 53 ist bevorzugt einstückig mit dem Endscheibenabschluss 26 über Verbindungsstege 55 verbunden, wobei die Verbindungsstege 55 umlaufend um den Auslass 14 angeordnet sind. Endscheibenabschluss 26 und Endscheibe 23 weisen jeweils Dichtsitze 54 für den äußeren Filterbalg 19 auf und fixieren diesen zusätzlich. Der hier nicht dargestellte Kannister 16 kann analog zu den vorherigen Ausführungen ausgeführt sein und verbindet so die beiden Endscheiben 23 und 26.

## Patentansprüche

1. Filtersystem für ein Fluid, aufweisend ein becherförmiges Gehäuse, ein lösbar darin angeordnetes Filterelement und einen Aufnahmekopf, wobei das becherförmige Gehäuse durch ein Mittel zur lösbaren Verbindung (36) mit dem Aufnahmekopf verbunden ist, wobei ein Teil des Filterelementes (15) gemeinsam mit dem becherförmigen Gehäuse (11) einen ersten Teil des Mittels zur lösbaren Verbindung (42) bildet und der Aufnahmekopf (12) einen zweiten Teil des Mittels zur lösbaren Verbindung bildet, derart, dass die Verbindung mit dem Aufnahmekopf (12) nur durch die Kombination von becherförmigen Gehäuse (11) mit dem Filterelement (15) ermöglicht wird, wobei das Mittel zur lösbaren Verbindung eine Bajonettverbindung ist und ein erstes Rastmittel durch eine korrespondierende Verbindung von becherförmigen Gehäuse und Filterelement gebildet wird, derart, dass ein Teil des Gehäuses (11) und ein Teil des Filterelements wenigstens teilweise ineinander greifen um eine durchgehende Rastkontur (42) zu bilden und wobei ein Mittel zur Blockierung der Verbindung im Anschlusskopf angeordnet ist, derart, dass ein Verbinden der Teile bei falschem oder fehlendem Filterelement ausgeschlossen wird, wobei das Blockiermittel (38) bei fehlendem Filterelement und damit einer nicht durchgehenden Rastkontur, in einer Aussparung (44) des becherförmigen Gehäuses (11) eingreift und ein Schließen des Bajonettverschlusses verhindert.

2. Gehäuse für ein Filtersystem gemäß Anspruch 1, **dadurch gekennzeichnet, dass** dieses im Wesentlichen zylindrisch ausgestaltet ist, wobei eine Stirnseite geschlossen und eine Stirnseite offen ausgeführt ist, wobei im Bereich der offenen Stirnseite Teile eines Mittel zur lösbaren Verbindung mit einem Aufnahmekopf (12) angeordnet sind, wobei die Teile der Mitteln zur lösbaren Verbindung Aussparungen (43) bilden, derart, dass die Mittel zur lösbaren Verbindung mittels eines eingesetzten Filterelementes (15) vervollständigbar sind.

3. Gehäuse nach Anspruch 2, **dadurch gekennzeichnet, dass** die Mittel zur lösbaren Verbindung über den äußeren Umfang verteilt am stirnseitigen offenen Ende des Gehäuses (11) angeordnet sind, wobei im Bereich der Aussparungen (43) der Mittel zur lösbaren Verbindung weiterhin Aussparungen im Gehäuse vorhanden sind, welche sich vom stirnseitigen Rand bis wenigstens zu den Mitteln zur lösbaren Verbindung erstrecken.

## Claims

1. Filter system for a fluid, including a beaker-shaped housing, a filter element which is releasably disposed therein and a receiver head, wherein the beaker-shaped housing is connected to the receiver head by a means for the releasable connection (36), wherein a part of the filter element (15), together with the beaker-shaped housing (11), forms a first part of the means for the releasable connection (42), and the receiver head (12) forms a second part of the means for the releasable connection, in such a manner that the connection with the receiver head (12) is only rendered possible by the combination of the beaker-shaped housing (11) with the filter element (15), wherein the means for the releasable connection is a bayonet-type connection, and a first locking means is formed by a corresponding connection between the beaker-shaped housing and the filter element in such a manner that a part of the housing (11) and a part of the filter element engage at least partially in one another in order to form a continuous locking contour (42), and wherein a means for blocking the connection is disposed in the connector head in such a manner that it is not possible for the parts to be connected if the filter element is incorrect or missing, the blocking means (38) engaging in a recess (44) of the beaker-shaped housing (11) and preventing the bayonet-type closure from closing if the filter element is missing and, hence, there is no continuous locking contour.

2. Housing for a filter system according to claim 1, **characterised in that** said system has a substantially cylindrical configuration, one end face being designed to be closed, and one end face being designed to be open, parts of a means for the releasable connection with a receiver head (12) being disposed in the region of the open end face, and the parts of the means for the releasable connection forming recesses (43) in such a manner that the means for the releasable connection can be completed by means of an inserted filter element (15).

3. Housing according to claim 2, **characterised in that** the means for the releasable connection, distributed over the external periphery, are disposed on the open end-face end of the housing (11), recesses in the housing also being provided in the region of the recesses (43) of the means for the releasable connection, said recesses extending from the end-face edge to at least the means for the releasable connection.

## Revendications

1. Système de filtre pour un fluide comportant un boîtier en forme de pot, recevant de manière amovible un élément de filtre ainsi qu'une tête de réception, dans lequel
le boîtier en forme de pot est relié à la tête de réception par une liaison amovible (36),
une partie de l'élément de filtre (15) forme avec le boîtier en forme de pot (11) une première partie du moyen de liaison amovible (42) et la tête de réception (12) forme une seconde partie du moyen de liaison amovible de façon que la liaison avec la tête de réception (12) ne soit possible que par la combinaison du boîtier (11) en forme de pot et de l'élément de filtre (15),
le moyen de liaison amovible est une liaison de type baïonnette et un premier moyen d'enclipsage est réalisé par une liaison correspondante du boîtier en forme de pot et de l'élément de filtre, de façon qu'une partie du boîtier (11) et une partie de l'élément de filtre s'interpénètrent au moins partiellement pour constituer un contour d'enclipsage (42), continu, et
il est prévu un moyen de blocage de la liaison dans la tête de raccordement de manière interdit la liaison des parties en cas de mauvais élément de filtre ou en l'absence de celui-ci,
en cas d'absence d'élément de filtre et ainsi de contour d'enclipsage non continu le moyen de blocage (38), pénétrant dans une découpe (44) du boîtier en forme de pot (11), interdit la fermeture de la liaison de type baïonnette.

2. Boîtier pour un système de filtre selon la revendication 1,
**caractérisé en ce que**
celui-ci est de forme pratiquement cylindrique, une face frontale étant fermée, une face frontale étant ouverte,
et dans la région de la face ouverte, se trouvent des parties d'un moyen de liaison amovible avec la tête de réception (12),
les parties des moyens de liaison amovible formant des découpes (43) de façon que les moyens de liaison amovible puissent être complétés par l'élément de filtre (15) mis en place.

3. Boîtier selon la revendication 2,
**caractérisé en ce que**
les moyens de liaison amovible sont répartis à la périphérie extérieure à l'extrémité frontale ouverte du boîtier (11), et
dans la région des découpes (43) des moyens de liaison amovible, il y a en outre des découpes dans le boîtier qui s'étendent du bord, côté frontal, au moins jusqu'aux moyens de liaison amovible.
